# EUROPEAN PATENT APPLICATION

(11) **EP 1 885 104 A1**
(43) Date of publication of application: **06.02.2008**
(21) Application number: 06118490.9
(22) Date of filing: 04.08.2006
(51) Int. Cl.: H04M 1/253, H04M 7/00

(54) **A method for establishing a communication over a packet based network**

(71) Applicant: Swisscom AG, 3050 Bern (CH)
(72) Inventor: van Kommer, Robert, 1752, Villars-sur-Glâne (CH); Platt, Ann-Byrd, 3007, Bern (CH)
(74) Representative: P&TS Patents & Technology Surveys SA

(57) **Abstract**

A method for establishing a communication over a packet based network, for example a Voice over IP (VoIP) call, is disclosed, which is initiated by a PSTN telephone call (3) from a caller (1) to a recipient (2), whereby both the caller (1) and the recipient (2) are equipped with VolP-enabled phone terminals (10, 20). A telephone call (3) over the PSTN between said caller (1) and said recipient (2) and a dialogue (4) within the audio channel of the PSTN telephone call (3) between the recipient's and caller's phone terminals (20, 10) is established. Said dialogue (4) comprises a plurality of audible signals emitted within the voice channel both by said caller's phone terminal (10) and by said recipient's phone terminal (20), whereby said audible signals will be automatically captured by the non-emitting terminal (10, 20). Said dialogue (4) allows the conditions of a connection over a VoIP-channel to be negotiated. Thereafter, according to the conditions negotiated, the connection over a VoIP-channel between the caller's phone terminal (10) and the recipient's phone terminal (20) is established, which then replaces said PSTN telephone connection (3).

## Description

### Field of the invention

The present invention concerns a method and a phone terminal for establishing communication over a packet based network.

### Description of related art

US-B1-6,373,835 includes a method of Internet phone for automatically dialing up a phone call connection across an Internet connection. Initially the caller manually dials a recipient's telephone number, and during the telephone call connection, the caller party's Internet phone automatically starts a dialing routine which notifies the recipient party's Internet phone that a phone call connection over an Internet connection is desired. The dialing may be a differential ringing sequence or a single ringing interval. When the dialing routine is being detected by the recipient party's Internet phone, the parties end the telephone connection and proceed to make separate connections to the Internet, including a connection to a Lightweight Directory Access Protocol (LDAP). The caller party and recipient party Internet phones submit their respective Internet protocol addresses and telephone numbers. The caller party additionally submits the recipient Internet phone's telephone number. Then the Internet connection for the intended phone call is automatically completed. This method requires a special dialing sequence to be transmitted from the caller to the recipient. Many phone network systems do not allow such a dialing sequence to be transmitted; the dialing tone is rather generated on the recipient's side.

US-A1-2005/0144445 discloses a method and adapter apparatus for securing information exchanged between a calling party and a called party. A first signal is generated, which is representative of an analog probe signal. The first signal is released towards the called party. Responsive to receipt from the called party of a second signal responsive to the analog probe signal and indicative of an ability of the called party to participate in a secure information exchange, negotiations are performed with the called party to securely exchange subsequent information with the called party. In this way, the adapter apparatus can securely exchange information without prior knowledge of whether the called party is secure-capable or secure-incapable and without prior knowledge of whether the called party is a POTS phone or a packet-switched device.

DE-A1-100 26 631 discloses an Internet connection establishment method. A DNS server signals the called subscriber terminal to check if Internet connection with the subscriber is possible through an ISDN-D channel of telephone line through call-back station, or through multiprotocol router and service provider of the called subscriber. The server sends the message including the dynamic IP address of the called subscriber to the calling terminal.

US-B1-6,614,786 discloses a dual mode Internet telephone, which is capable of operating as a tone/pulse dial telephone as well as with the Internet by transmitting dual-tone multi-frequency (DTMF) tones in response to dialing. The dual mode telephone includes a mode control switch which is either manually selectable to permit a user to choose between making a call over a standard telephone network or over the Internet or is automatically controlled to route the call via the more advantageous communications link depending upon various factors and considerations. In the standard telephone mode of operation, most of the Internet telephone circuit is disabled and the dial/touchtone keypad, earpiece and mouthpiece, and ringer are connected to the telephone line. In the Internet mode of operation, dialed digits are stored and converted to Internet telephony call set-up messages.

US-A1-2006/050682 discloses a Voice over IP analog telephone adapter coupled to a telephone that allows a telephone call to be made over the Public Switched Telephone Network (PSTN) or over the Internet. Prior to dialing a phone number, with the telephone "off-hook", a caller receives an audible indication as to whether the call will be made over the PSTN or the Internet through a standard dial tone generated by a Central Office or a distinctive dial tone generated by the adapter. The distinctive dial tone is different from the PSTN's dial tone.

US-A1-2005/169250 provides a call back of a VoIP-Terminal. In providing call backup of a VoIP terminal, where the VoIP terminal connected to a VoIP network is automatically provided with a PSTN backup function, the on-hook state is deferred for a predetermined time period even when the on-hook state is required to be performed while a user makes an urgent communication, and a ring tone signal transmitted from a PSTN can be detected even when the telephone connected to the VoIP terminal is in a VoIP mode state. Simultaneously, the telephone connected to the VoIP terminal senses the hook state of the telephone in the state of the PSTN, and can be automatically connected to the VoIP network upon the VoIP terminal being on-hook.

US-A1-2004/101116 discloses a multifunctional machine which functions as a telephone terminal equipment requesting a connection to an Internet terminal equipment evoked from a transfer operation while the multifunctional machine is connected to a telephone terminal equipment. The multifunctional machine can be connected to the Internet terminal equipment if this Internet terminal equipment responds to the request. After the multifunctional machine is connected to both terminal equipments, an audio call amongst the three parties, the multifunctional machine, the telephone and Internet terminal equipments can be achieved with input/output sound corresponding to audio signals input/output between the multifunction machine and the respective terminal equipments from a telephone transmitter/receiver.

US-A1-2004/032861 discloses a composite voice service terminal apparatus which includes a variety of voice call service functions to enable a user or subscriber to selectively use the services on his/her call purpose.

JP-A-2004/040653 discloses a VoIP communication device and defines a method for a VoIP communication.

### Brief summary of the invention

It is an aim of the invention to provide a new method for replacing an existing phone communication over a Public Switched Telephone Network by a communication over a packet based network.

In this application, we mean by Public Switched Telephone Network (PSTN) the concentration of the world's public circuit-switched telephone networks. Originally a network of fixed-line analog telephone systems, the PSTN is now partly digital, and now includes mobile as well as fixed telephones. PSTN devices include analog fixed phone, ISDN phones, mobile phones, fax devices, analog and ISDN modems, etc.

More specifically, the method preferably enables one party to signal to the other party its ability to establish a communication over a packet based network, whereas this indication should be transmitted over any kind of public switched telephone network and received even by conventional phone equipments. The method preferably also enables the parameters of the new, packet based communication to be negotiated between the caller and the recipient.

It is another aim of the present invention to provide a phone terminal, which enables the users to establish a communication over a packet based network from a telephone call over a PSTN.

According to the invention, these aims are achieved by means of a method comprising the step of
(a) establishing a telephone call between recipient's and caller's phone terminals;
(b) establishing a dialogue in the audio channel of the telephone call over a public switched telephone network between recipient's and caller's phone terminals, said dialogue comprising a plurality of audible signals emitted in the voice channel both by said caller's phone terminal and by said recipient's phone terminal, said audible signals being automatically captured by the non-emitting terminal, said dialogue allowing the conditions of a communication over a packet based network to be negotiated,
(c) establishing the communication over a packet based network between the caller's phone terminal and the recipient's phone terminal under the conditions negotiated by said dialogue between the recipient's and caller's phone terminals.

The aims are also attained by a phone terminal according to claim 28, which can be used by the user of the inventive method.

The dialogue of the invention has the advantage that one party, for example the caller, can indicate to the other party his willingness to replace the communication over a PSTN by a communication over a packet based network with a first audible signal that is very easy to generate. As this possibly machine-generated signal is transmitted over the voice channel, its transmission is basically transparent for the network, so that about any kind of phone network, including fixed phone networks, mobile phone networks, VoIP networks, etc, will transmit this signal with only unavoidable alterations. The signal may be very short, and barely perceptible for the users, because it does not need to contain all the parameters for establishment of a communication over a packet based network; those parameters will only be exchanged during the subsequent dialogue that may occur only if the other party (the recipient) answers the first audible signal. The first audible signal thus only needs to be unambiguously distinguishable from other speech signals likely to be transmitted over the voice channel.

The method of the invention allows to change not only the network used for the communication, but also the dialing plan (i.e. the dialing number used for establishing the communication and caller number transmitted to the recipient) as well as the billing conditions.

Dependent claims give advantageous embodiments of the present invention.

### Brief Description of the Drawings

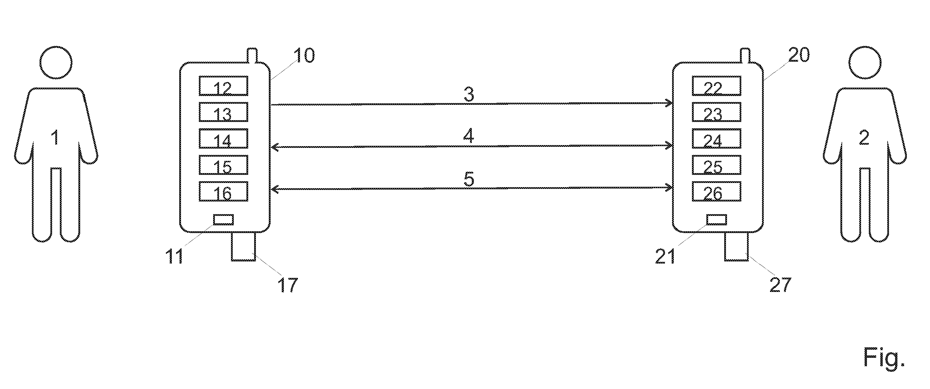

The invention will be better understood with the aid of the description of an embodiment given by way of example and illustrated by the drawings, in which the only Figure shows a view of a communication system to establish a communication over a packet based network according to the present invention.

### Detailed Description of possible embodiments of the Invention

As seen in the single Figure, a method for establishing a communication over a packet based network, for example a Voice over IP (VoIP) call, initiated by a telephone call 3 over a PSTN from a caller 1 to a recipient 2 is disclosed. Both the caller 1 and the recipient 2 are equipped with phone terminals 10, 20 and with terminals for packet based communications, for example IP terminals. In an embodiment, the phone terminal is combined with the IP terminal, for example as combined PSTN and VoIP-enabled phone terminal.

In a first step of the invention, a telephone call 3 between said caller 1 and said recipient 2 is established over a PSTN. Recipient 2 may be a human user of phone terminal 20, a call center, or an interactive voice response (IVR) system with speech recognition and synthesis capabilities.

In a next step, one party, for example, the caller or the caller's terminal, indicates his/its willingness to replace the existing PSTN call by a communication over a packet based network, or to complete the existing phone call with an additional packet based communication. Examples of communications over a packet based network that may be established include any combination of one or more of, among others:
• a VoIP communication,
• a pure data or text communication over an IP channel,
• a multimodal communication, including voice and data, over an IP channel
• an instant messaging, teleconference or remote desktop session
• a man-to-machine IP session with a remote machine,
• an exchange of keys
• a ftp, http, or https session,
• a peer-to-peer communication over a packet based network
• a communication over a local network, including a WLAN or Bluetooth network
• exchange of billing messages (IP billing)
• etc

In order to negotiate the conditions of the new communication over the packet based network, from one of both terminals 10, 20 a dialogue 4 is thereafter established in the audio channel of the telephone call 3 over the PSTN between the recipient's 2 and the caller's 1 phone terminals 20, 10. Said dialogue 4 comprises a plurality of audible signals emitted in the voice channel of the PSTN telephone call 3 both by said caller's phone terminal 10 and by said recipient's phone terminal 20, and said audible signals are automatically captured by the non-emitting terminal 10, 20. Said dialogue 4 allows discussing and negotiating different conditions as mentioned below according to which a packet based communication over a connectionless channel is established between both terminals 10, 20.

Thereafter, a communication 5 over a packet based network is established between the caller's phone terminal 10 and the recipient's phone terminal 20 taking into account the conditions negotiated by said dialogue 4 between the recipient's and the caller's phone terminals 10, 20. The packet based communication replaces or complements said telephone connection 3 over a PSTN. In one embodiment, as soon as the success of establishment of said new communication 5 is confirmed, the PSTN telephone call can automatically be disconnected. In another embodiment of the present invention, the PSTN telephone call 3 is maintained in parallel with said communication over a packet based network. The step of establishing a connection over a packet based network can be done by a call-back connection from the recipient's terminal 20 to the caller's terminal 10.

According to the invention, a phone terminal 10, 20 can be a mobile phone terminal connected to a wireless mobile network. As an example, this can be GSM, CDMA etc. However, a fixed phone terminal, a wireless access, for example WLAN, to an Internet terminal or a router or a modem for establishing an Internet connection over the PSTN with an ISP is possible in accordance with the present invention. In another embodiment, the new communication is established with a different equipment than the originating phone terminal, or simultaneously with the phone terminal and a separate equipment. For example, the initial communication over the PSTN may involve, at the caller's and/or recipient's side, a conventional phone for a PSTN, whereas the new communication over a packet based network may involve, instead or in addition, a personal computer or any other kind of Internet terminal, on the caller's and/or recipient's side.

To execute the present invention, the phone terminal comprises a microphone 11, 21, a loudspeaker 12, 22 and conventional means 13, 23 for establishing and answering phone calls over a PSTN. The terminal is modified to include means 14, 24 for generating and capturing audible signals in the voice channel during a call 3 over said PSTN, so as to negotiate the conditions of a communication over a packet based network 5 with the recipient 2, and finally means 15, 25 for establishing and answering packet based communications over an IP network and means 16, 26 for replacing a phone call over the PSTN by a packet based communication. The means for generating the initial audio signal may be omitted; in this case, the audible signal may be a voice command uttered by the user of the phone terminal and recognized by the equipment of the other party. Selection means to give the user the possibility of a manual entry of a telephone number and commands important for the packet based communication can also be provided. The means 14, 24 may include a modem for coding digital information into an audible signal that may be transmitted over the voice channel, as well as a dialogue manager for deciding, depending on the reaction of the other terminal and/or on user's settings and choices, on the signal that should be transmitted to the other terminal during each stage of the dialogue. The dialogue manager and the means 15, 16, 25, 26 may be implemented by corresponding pieces of software run by processing means in the terminal.

As usual for existing mobile phone, there may be identification modules 17, 27 such as SIM cards for the identification of the users in the mobile telephone network.

The dialogue 3 of the invention has the advantage that one party, for example the caller 1, can indicate to the other party his willingness to replace the PSTN communication 3 by a packet based communication 5 with a first audible signal very easy to generate. As this signal is transmitted over the voice channel, its transmission is basically transparent for the network, so that about any kind of phone network, including PSTN with fixed phone network, mobile phone networks, but also VoIP networks etc, will transmit this signal with only unavoidable alterations. The signal may be very short and barely perceptible for the users, because it does not need to code all the parameters for establishment of a packet based communication; those parameters will only be exchanged during the subsequent dialogue 4 that occurs only if the other party (the recipient 2) answers the first audible signal. The first audible signal thus only needs to be unambiguously distinguishable from other speech signals likely to be transmitted over the voice channel.

The dialogue 4 between the caller 1's phone terminal 10 and the recipient 2's phone terminal 20 can comprise one or a plurality of exchanges of audible signals transmitted over the voice channel for coding a variety of parameters of the packet based communication. If the recipient does not answer to the first, or a subsequent signal, in the expected way, a special procedure may be started on the sending side, for example in order to signal this to the caller and/or to start the download of the required software capability to the other party. A similar procedure may be initiated from the recipient's side in any case of failed negotiation or by any party when the other party expresses its willingness to do so.

The dialogue may comprise inter alia one or a plurality of the following features:
• It is automatically initiated by a terminal 10, 20 of one party. It can comprise a first part to discuss the willingness to establish a VoIP connection.
• The dialogue can start with a machine-generated audible signal emitted by the terminal of one party to indicate to the terminal of the other party its willingness to establish a connection over a VoIP-channel.
• Alternatively, the dialogue may start with a human generated audio command spoken by one party.
• The dialogue may be automatically generated, for example after each call establishment, or manually initiated by one user of one of said terminals 10, 20. Generation of the first signal may also depend on the called party. The terminal may for example automatically store in a directory preferences and communication parameters for frequently called parties. If all parameters a packet based communication are known a-priori, the terminal may choose to establish immediately a VoIP connection. If on the other hand the terminal knows that a selected called party only has a conventional (PSTN) phone terminal, it may decide not to generate the inviting audible signal. Only when the capabilities of the other party are uncertain will the signal of the invention be generated. Permanent user settings, user choices introduced during the selection, and/or information from public directories in the Internet may also be used for deciding if an audible signal should be generated.
• Said dialogue being automatically initiated by one party and interrupted if the other party does not answer in an expected way.
• It can comprise a part to discuss the type of packet based communication to establish (VoIP? Instant messaging? Multimodal communication? Etc)
• It can comprise a part to discuss the VoIP-system (Skype, etc.) to be used and/or the software version of the packet based communication-system to be used.
• The dialogue 4 can comprise the IP address (IP address, VoIP address, SIP address, Skype name, etc.) of one or both parties .
• It can comprise a requested quality of service (QOS).
• It can comprise a part to discuss if a video transmission is used in addition to a transmitted speech, and parameters for the video transmission.
• It can comprise a part to determine the terminals to be used on each side of the communication (initial phone equipment? Personal computer? Any combination?)
• It can comprise a part for defining if a phone conference with other participants is initiated.
• It can comprise a part for deciding if and what encryption of the VoIP transmission is used. If an encryption is used, public keys of the participants can be exchanged and used for transmission.
• It can comprise a part to negotiate billing conditions for the new communication. For example, a negotiation about which party will support which costs may be included. The negotiation may concern the communication costs over the PSTN, the communication costs over the packet based networks, and/or fees for value-added services provided by one party to the other (for example if one party calls a call center for requesting some support)
• It can comprise actual billing, for example through exchange of billing messages, for the communication itself or for services provided by one party to the other.
• There is also a possibility for a user to modify said dialogue 4, for example by manually entering DTMF commands or special dial numbers, by speaking machine-recognized instructions, or using predefined settings stored in user's equipment (terminals 10, 20).
• A decision to establish or not a packet based communication may also depend on external conditions that may be checked by one or the other terminal during the dialogue. For example, the decisions may depend on information retrieved from a server in the Internet, including current communication fees for a packet based or PSTN call, on the distance between both parties, as determined from their phone numbers and/or with network or terminal based location means, on a roaming condition of one or both parties, on user or operator settings in a central server, on the current traffic load on the IP channel, on the location of each terminal, on the monetary amount left on a prepaid account for the PSTN and/or VoIP connection, and/or from auxiliary equipment (headset, handfree set, etc) connected to the terminal.
• The parameters for the dialogue can also be used which have been negotiated from a prior connection of one party with the other party or with another party with which a packed-based communication was established. It is then only agreed that stored parameters are used, which have been negotiated in a prior dialogue for establishing a packet based communication.
• Said dialogue 4 can include voice, text, graphic or multimodal prompts addressed to the caller 1 or recipient 2, expecting some kind of reaction (speech, DTMF, selection on a multimodal user interface, etc) for defining at least some aspects of the new communication.
• Some parameters of the packet based communication may also be negotiated over an IP channel, for example once a VoIP has been established.

Once all the required parameters for a communication over a packet based network have been successfully negotiated, and a decision to establish a VoIP connection made, the packet based communication is established, either by the caller using the Recipient IP address exchanged during the dialogue, or as a call-back by the recipient using the IP address of the caller, that may for example be already coded in the initial audible signal.

At least some of the parameters exchanged during the dialogue over the voice channel, and/or parameters exchanged over the IP channel, may be stored in a directory in the caller's and/or recipient's terminal, or possibly in a central repository, and retrieved for future calls. Dialogue during subsequent calls between the parties may thus be simplified, or even become unnecessary if all parameters are available a priori for attempting a packet based communication.

Replacement of the existing connection by a packet based communication is preferably fully automatic and transparent for both parties. For example, establishment of a VoIP connection starts in the background while both parties actually speak in the voice channel, and both terminals simultaneously switch to VoIP mode after a successful negotiation. An audible, visual and/or multimodal signal may however be generated by at least one of the terminal to indicate a VoIP connection, especially if the quality and/or billing conditions have changed.

If the packet based communication does not offer a requested quality or does not fulfill in any possible way one user's or terminal's expectations, the packet based communication may be automatically, or initiated by a command, abandoned and replaced by a connection over the PSTN.

If one party does not have an equipment with the software capabilities for a desired type of packet based communication, or in other cases of failed negotiation, the other party may supply the required piece of software, for example as a program, program update, new plug-in for an existing application, Java applet, data, digital right management key, or cryptographic key. This piece of software is then downloaded by the requiring party, installed in its equipment, and after successful installation used for the new, packet based communication. Negotiation about the piece of software to install, the address from where the software must be retrieved, the capabilities of the recipient to install it (type of equipment, available memory, operating system, access rights, billing, etc) may occur at least in part over the above described audio dialogue of the invention.

The piece of software may be transmitted by one party to the other, or from an external source, for example a server in the Internet, to one or both parties. The software may be sold or licensed for a limited number of usages by the providing party; billing may occur for example with billing messages transmitted over the packet based network.

In an embodiment, the required software piece, or a link to this software, is transmitted through the above mentioned audio-channel. The link may point for example to a HTTP or FTP server on the Internet, from where the required piece of software may be retrieved. In another embodiment, the software or link to the software is transmitted through a separate channel between the parties, preferably a secure, peer-to-peer channel, for example in an MMS or USSD. This embodiment is for example appropriate for the safe transmission of cryptographic keys needed for establishing a secure communication over the packet based network. In a third embodiment, the required piece of software is transmitted over the packet based network, if a sufficient packet based communication can be established between the delivery source of the software and the recipient. This embodiment is especially adapted for the transmission of software update.

### Reference numbers

- 1: Caller
- 10: Phone Terminal
- 11: Microphone
- 12: Loudspeaker
- 13: Means for establishing and answering phone calls over a PSTN
- 14: Means for generating and capturing audible signals
- 15: Means for establishing and answering packet based communication over an IP network
- 16: Means for replacing a phone call over the PSTN by a packet-based communication
- 17: Identification module

- 2: Recipient
- 20: Phone terminal
- 21: Microphone
- 22: Loudspeaker
- 23: Means for establishing and answering phone calls over a PSTN
- 24: Means for generating and capturing audible signals
- 25: Means for establishing and answering communications over a packet based network.
- 26: Means for replacing a phone call over the PSTN by a communication over a packet based network
- 27: Identification module

- 3: Telephone call over a PSTN
- 4: Dialogue
- 5: Connection over a packet based network, for example a VoIP channel VoIP Voice over IP

## Claims

1. A method for establishing a communication over a packet based network initiated by a telephone call over a public switched telephone network (PSTN) from a caller (1) to a recipient (2), , the method comprising the steps of:
(a) establishing a PSTN telephone call (3) over the PSTN between recipient's (2) and caller's (1) phone terminals (10, 20);
(b) establishing a dialogue (4) in the audio channel of said telephone call (3) between recipient's (2) and caller's (1) phone terminals (10, 20), said dialogue (4) comprising a plurality of audible signals emitted in the voice channel both by said caller's phone terminal (10) and by said recipient's phone terminal (20), said audible signals being automatically captured by the non-emitting terminal (10, 20), said dialogue (4) allowing the conditions of a communication (5) over a packet based network to be negotiated,
(c) establishing the communication (5) over a packet based network between the caller (1) and the recipient (2) under the conditions negotiated by said dialogue (4) between the between recipient's and caller's phone terminals (20, 10).

2. A method according to claim 1, **characterized in that** said PSTN telephone call (3) is automatically disconnected as soon as the successful establishment of said communication over a packet based network-channel is confirmed.

3. A method according to claim 1, **characterized in that** in the dialogue (4) between the caller's phone terminal (10) and the recipient's phone terminal (20) is negotiated so that the PSTN telephone call (3) is maintained in parallel with said communication over a packet based network.

4. A method according to any of the claims 1 to 3, **characterized in that** said dialogue (4) between the caller's phone terminal (10) and the recipient's phone terminal (20) is automatically initiated by the terminal (10, 20) of one party.

5. A method according to any of the claims 1 to 4, **characterized in that** said dialogue (4) is initiated by a machine-generated audible signal emitted by the terminal of one party to indicate to the terminal of the other party its willingness to establish said communication (5) over a packet based network.

6. A method according to any of the claims 1 to 5, **characterized in that** said dialogue (4) is manually initiated by one user of one of said terminals (10, 20).

7. A method according to any of the claims 1 to 6, **characterized in that** the step of establishing a communication (5) over a packet based network comprises the establishment of a call-back connection from the recipient's terminal (20) to the caller's terminal (10).

8. A method according to any of the claims 1 to 7, **characterized in that** said dialogue (4) comprises a part for negotiating the type of communication to establish over said packet based network.

9. A method according to any of the claims 1 to 8, **characterized in that** said dialogue (4) comprises a part for negotiating the software version to be used in said terminals for said communication over a packet based network.

10. A method according to any of the claims 1 to 9, **characterized in that** parameters or preferences previously stored are used for defining parameters of said communication (5) over a packet based network.

11. A method according to any of the claims 1 to 10, **characterized in that** said dialogue (4) comprises the transmission of an address in the network-based network of one or both parties.

12. A method according to any of the claims 1 to 11, **characterized in that** said dialogue (4) comprises a part for negotiating the requested quality of service.

13. A method according to any of the claims 1 to 15, **characterized in that** said dialogue (4) comprises a part to discuss if a video transmission is used in addition to the VoIP channel, and the parameters for the video transmission.

14. A method according to any of the claims 1 to 13, **characterized in that** said dialogue (4) comprises a part for defining if a phone conference with other participants is initiated.

15. A method according to any of the claims 1 to 14, **characterized in that** said dialogue (4) comprises a part for defining if and/or what encryption of the communication over said packet based network is used.

16. A method according to claim 15, **characterized** that if an encryption is used, public keys of the participants are exchanged and used.

17. A method according to any of the claims 1 to 16, **characterized in that** said dialogue (4) comprises a part to negotiate billing conditions for the communication over the packet based network, and/or for the PSTN telephone call (3), and/or for the services provided by one party to the other party.

18. A method according to any of the claims 1 to 17, **characterized in that** there is a possibility for a user to modify said dialogue, using for example DTMF commands, special dial numbers, voice commands, and/or predefined settings stored in the user's equipment.

19. A method according to any of the claims 1 to 18, **characterized** that said dialogue (4) includes voice, text, graphic and/or multimodal prompts addressed to the caller (1) and/or recipient (2), expecting some kind of reaction for defining at least some aspects of the communication (5) over said network-based network.

20. A method according to any of the claims 1 to 19, **characterized** that said dialogue (5) is automatically initiated by one party and interrupted if the other party does not answer in an expected way.

21. A method according to any of the claims 1 to 20, **characterized** that at least some parameters of the communication over a packet based network are transmitted over said packet based network.

22. A method according to one of the claims 1 to 21, wherein said communication over a packet based network involves, in addition or in replacement of said phone terminals, one or more computer equipment at the caller's and/or recipient's side.

23. A method according to one of the claims 1 to 22, comprising a step of transmitting software capabilities required for said communication over a packet based network, and installing said software the receiving terminal.

24. A method according to claim 23, wherein said software's capability is transmitted over said public switched telephone network during said dialogue.

25. A method according to claim 23, wherein said software's capability is transmitted over packet based network.

26. A method according to claim 23, wherein said software's capability is transmitted over a separate channel, for example using SMS.

27. A method according to claim 23, wherein said software's capability include cryptographic keys required for securing said communication over a packet based network.

28. A phone terminal (10, 20) comprising:
a microphone (11, 21),
a loudspeaker (12, 22),
means (13, 23) for establishing and answering phone calls over a public switched telephone network,
means (14, 24) for initiating and participating in communications over a packet based network,
means (15, 25) for generating and capturing audible signals in the voice channel during a call over said public switched telephone network, so as to negotiate the conditions of a communication over a packet based network with the recipient.

29. A phone terminal (10, 20) according to claim 28, including wireless access, for example WLAN, to an Internet terminal or router.

30. A phone terminal (10, 20) according to claim 28, including a modem or router for establishing an Internet connection over said public switched telephone network with an ISP.
